# EUROPEAN PATENT APPLICATION

(11) **EP 3 505 018 A1**
(43) Date of publication of application: **03.07.2019**
(21) Application number: 17846946.6
(22) Date of filing: 29.08.2017
(51) Int. Cl.: A47J 19/02, A47J 19/06, A23N 1/00

(54) **JUICER THAT IS EASY TO MANUFACTURE AND EXHIBITS IMPROVED PERFORMANCE**

(30) Priority: 29.08.2016 KR 20160110023
(71) Applicant: Angel Co., Ltd., Sasang-gu Busan 46988 (KR)
(72) Inventor: LEE, Mun Hyun, Nonsan-si Chungcheongnam-do 33026 (KR); KIM, Chom Tu I, Busan 47168 (KR); LEE, Mong Ryong, Busan 47857 (KR); SON, Jin Woo, Busan 47585 (KR); YANG, Han Sung, Busan 48040 (KR); JANG, Jeong Su, Busan 49519 (KR); PARK, Seong-hwan, Busan 47391 (KR); KWON, Na Hyun, Busan 49507 (KR); JI, Eun Hui, Busan 49516 (KR); KIM, Min Ji, Busan 46644 (KR); PARK, Hye-Jung, Busan, 47840 (KR)
(74) Representative: Vossius & Partner Patentanwälte Rechtsanwälte mbB
(86) International application number: PCT/KR2017/009396
(87) International publication number: WO 2018/044021

(57) **Abstract**

The present disclosure relates to a juicer that is easy to manufacture and improves performance, the juicer includes a driving part composed of a housing having a housing hollow part formed therein and a motor provided the housing hollow part by being surrounded by a motor housing, a juice part connected to the driving part to be driven by the driving part to squeeze the juice, and a fastening part for detachably coupling the juice part to the driving part; the motor housing is composed of an upper motor housing in a shape opened downwardly and a lower motor housing having a shape opened upwardly and coupled to face the upper motor housing to be formed in a shape opened forwardly and backwardly, and is formed with a motor housing opening portion eccentric to one side in the width direction from the central portion thereof to be opened downwardly; a cooling fan for causing downward flow of air by operation is provided in the motor housing opening portion, and the housing is formed with a through-hole that is penetrated vertically so as to be eccentric to one side in the width direction from the central portion thereof to dispose on the lower portion of the cooling fan; and the inner air is discharged by the operation of the cooling fan through the through-hole formed at the position eccentric to one side from the central portion in the width direction thereof.

## Description

### [Technical Field]

The present disclosure relates to a juicer that is easy to manufacture and improves performance, which is easy to assemble, has a low possibility of occurrence of an erroneous assembly, and has improved operation performance.

### [Background Art]

In general, a juicer is a machine for extracting juice by squeezing materials such as various vegetables or fruits and includes a centrifugal separation type and a twin gear type. The centrifugal separation type is suitable as a juicer for extracting fruit juice such as fruits, but there was a problem in that a juice extraction rate is not very high even if the vegetable having fiber-rich and low water content is cut at a very high-speed rotation for extracting juice. On the contrary, the twin gear type is a configuration of cutting and squeezing the materials or cutting and squeezing simultaneously the materials to extract juice, and has an advantage in that the juice extraction rate is several times higher than that of the centrifugal separation type, such that most of the juice market demand is currently occupied by the twin gear type juicer.

The twin gear type juicer includes a pair of crushing parts in the form of helical gear and a pair of conveying parts in the form of an Archimedes spiral, and the crushing part and the conveying part are accommodated in a housing in which a juice netting is formed, and then the housing and a driving part are coupled to each other through a fastening part. The pair of crushing parts are driven by the driving part and rotated while interlocking with each other to crush and juice the injected materials to convey it to the conveying part, and the conveying part may convey and squeeze the crushed materials to thereby extract the juice from the materials. The fastening part is configured to include two arms each having a semicircular cross section hinged to one end of the driving part, a lever hinged and extended to the tip of one arm, and a link each hinged between the tip of the other arm and the middle of the lever.

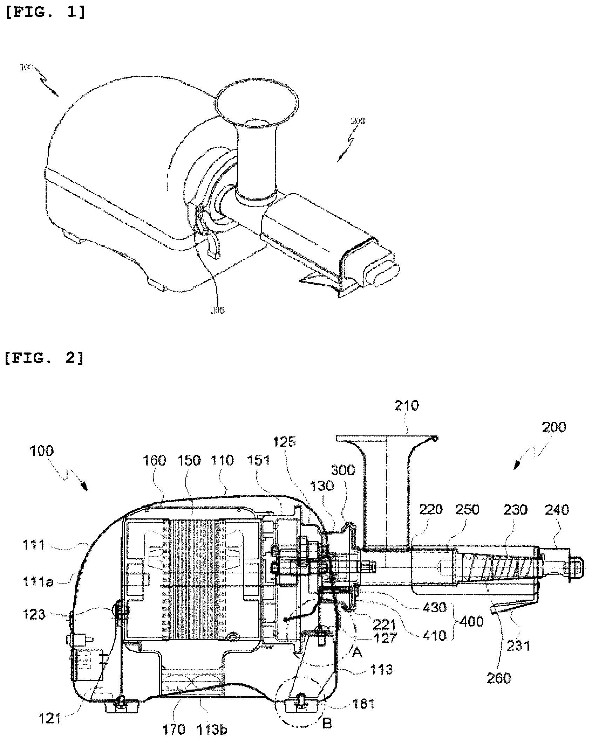

As illustrated in FIGS. 1 and 2, the juicer is composed of a driving part 100, a juice part 200 connected to the driving part 100 by a fastening part 300 to juice the juice, and the fastening part 300 for connecting the juice part 200 to the driving part 100.

The driving part 100 is composed of a hollow housing 110 and a motor 150 provided in the housing 110. The housing 110 is provided with a hollow first connection part 130 formed in the shape that is protruded forwardly and increases in diameter forwardly toward the longitudinal direction thereof and decreases again on the end portion thereof.

The housing 110 is composed of a lower housing 113 opened upwardly and recessed, and an upper housing 111 opened downwardly and coupled to the upper portion of the lower housing 113 to form a hollow part 110a therein. The lower housing 113 and the upper housing 111 are coupled to each other so that the opened portions thereof face each other, and the housing hollow part 110a is formed therein. The housing 110 may be made of metal or plastic.

The upper end portion of the lower housing 113 is inserted into the lower end portion of the upper housing 111, and a fastening screw 115 is fastened through the lower end portion of the upper housing 111 and the upper end portion of the lower housing 113 at one or more positions along the circumference thereof.

The motor 150 is installed in the housing hollow unit 110a formed by the lower housing 113 and the upper housing 111. The housing hollow unit 110a is provided with a plate-shaped first bracket 121 that is disposed at the rear thereof, is coupled to the bottom portion of the lower housing 113, and has a shape extended in the width direction thereof, and is provided with a second bracket 125 that is spaced apart from the first bracket 121 forwardly to be coupled to the lower housing 113. The first bracket 121 and the second bracket 125 may also be coupled and installed to the upper housing 111. The first bracket 121 and the second bracket 125 have a bent structure for increasing stiffness.

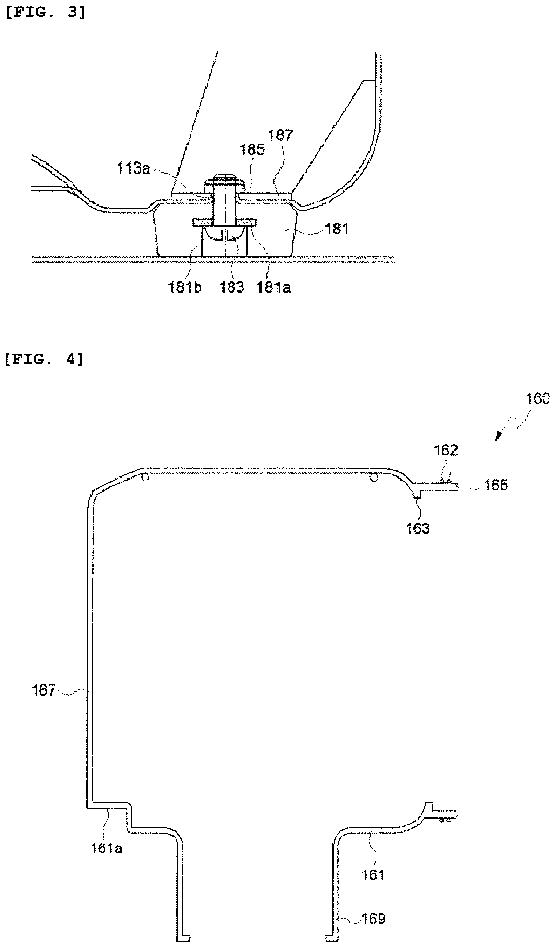

In FIGS. 1 and 3, reference numeral 151 refers to a connection bracket provided at the front of the motor 150 and having the front end portion inserted into the second bracket 125.

The motor 150 is inserted into the motor housing 160. The motor housing 160 is formed in a shape opened forwardly. The motor housing 160 has a hollow downward extension part 169 extended downwardly and having the end portion opened. The motor housing 160 has a step portion 161a to which the rear end portion of the motor 150 inserted into the motor housing 160 is inserted and seated formed on the rear thereof. A motor housing support protrusion 163 protruded inwardly is provided on the opened front end portion of the motor housing 160, and a motor housing extension part 165 protruded forwardly from the support protrusion 163 is provided. The support protrusion 163 protrudes inwardly from the motor housing extension 165 to form a forwardly facing motor housing step part.

The motor 150 is inserted from the front thereof into the motor housing 160, and the rotation shaft of the motor 150 is projected forwardly.

The motor housing 160 is interposed between the first bracket 121 and the second bracket 125. The second bracket 125 is formed in a structure in which a center portion thereof is perforated so that the rotation shaft protruded forwardly or a drive shaft (not illustrated) connected to the rotation shaft may pass through.

In FIG. 2, reference numeral 123 refers to a fixing screw for fixing the motor 150 to the first bracket 121, and 127 to a fixing screw for fixing the second bracket 125 to the housing 110.

The motor 150 is inserted into the second bracket 125 toward the motor housing 160 to be supported by the second bracket 125.

A circular through-hole 113b is formed in the bottom of the lower housing 113 about at the central portion thereof. A cooling fan 170 is installed on the bottom of the lower housing 113 so as to be disposed on the upper portion of the through-hole 113b of the lower housing 113. When the cooling fan 170 is operated, the air is exhausted downwardly through the through-hole 113b of the lower housing 113.

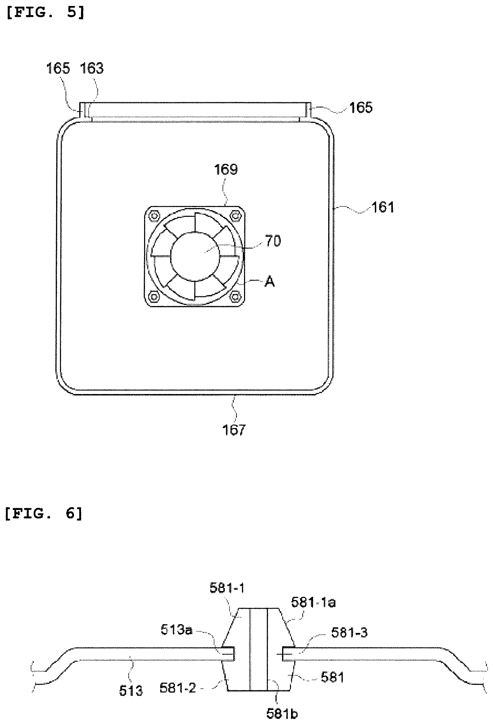

As illustrated in FIG. 6, the cooling fan 170 is disposed within the downward extension part 169 of the motor housing 160. When the cooling fan 170 is operated, the air in the motor housing 160 flows downwardly along the downward extension part 169 and is discharged through the cooling fan 170 and the through-hole of the lower housing 113. A net (e.g., 1mm mesh) may be installed between the cooling fan 170 and the bottom of the lower housing 113. In FIG. 2, reference numeral 111a refers to a communication hole formed in plural on the rear of the upper housing 111 so that the air is communicated inwardly and outwardly.

As illustrated in FIGS. 2 and 4, the lower housing 113 is provided with a support member 181 having a circular cross section made of urethane rubber, etc. A support member installation hole 113a vertically penetrated is formed on the bottom of the lower housing 113. The support member 181 is provided in contact with the bottom surface of the bottom of the lower housing 113. The support member 181 is formed with a support member coupling hole 181b that forms a downward step portion and vertically penetrates. A support member coupling screw 183 is inserted into the support member coupling hole 181b through the support member installation hole 113a and the end portion of the support member coupling screw 183 is protruded into the housing hollow part 110a, and a coupling nut 185 is fastened to the protruded support member coupling screws 183 to install the support member. A washer 187 is further provided between the coupling nut 185 and the bottom of the lower housing 113. In FIG. 4, reference numeral 181a refers to an annular support member reinforcement part installed in the support member installation hole 113a to contact with the coupling screw 183. The juice part 200 is connected to the driving part by the fastening part 300 to be driven.

The description of the fastening part 300 and the juice part 200 is well known in the related art and will be omitted herein.

There have been problems in that the above-described juice part according to the related art requires a plurality of parts for installing the support member 181, and the operation for coupling is not simple, and when the lower housing 113 and the upper housing 111 are coupled, the upper housing 111 fell down excessively and the upper end portion of the lower housing 113 was inwardly deformed in contact with the inner surface of the upper housing 111 while falling down excessively, and thereby damage such as scratch occurred on the outer surface of the lower housing 113 by the lower end portion of the upper housing 111, it was not easy to insert the motor 150 into the motor housing 160, and the housing 110 was heated by the inner air discharged through the downward extension part 169.

### [Disclosure]

### [Technical Problem]

The present disclosure is intended to solve the above problems, and an object of the present disclosure is to provide a juicer that is easy to manufacture and improves performance, which may be easy to assemble, prevent occurrence of defects in a manufacturing process, and suppress overheating of the housing by use.

### [Technical Solution]

For achieving the object, the present disclosure provides a juicer that is easy to manufacture and improves performance including a driving part composed of a housing having a housing hollow part formed therein and a motor provided the housing hollow part by being surrounded by a motor housing, a juice part connected to the driving part to be driven by the driving part to squeeze the juice, and a fastening part for detachably coupling the juice part to the driving part; the motor housing is composed of an upper motor housing having a shape opened downwardly and a lower motor housing having a shape opened upwardly and coupled to face the upper motor housing to be formed in a shape opened forwardly and backwardly, and is formed with a motor housing opening portion eccentric to one side in the width direction from the central portion thereof to be opened downwardly; a cooling fan for causing downward flow of air by operation is provided in the motor housing opening portion, and the housing is formed with a through-hole that is penetrated vertically so as to be eccentric to one side in the width direction from the central portion thereof to dispose on the lower portion of the cooling fan; and the inner air is discharged by the operation of the cooling fan through the through-hole formed at the position eccentric to one side from the central portion in the width direction thereof.

As described above, the lower motor housing has a hollow lower motor housing extension portion, which is extended downwardly at the position eccentric to one side in the width direction from the central portion thereof, provided on the lower portion thereof, and the motor housing opening portion is formed to have the end portion of the lower motor housing extension portion opened; the cooling fan is provided in the lower motor housing extension portion; and a flow guide member penetrated vertically is formed on the lower portion of the cooling fan, and the flow guide member is spaced apart from each other and has a guide member inclined in the direction in which the lower motor housing extension portion has been eccentric, and thereby, the air flowed downwardly by the cooling fan is discharged by diverting to the eccentric direction while passing through the flow guide member.

As described above, the motor housing has a guide protrusion, which has a shape parallel with each other, protruded inwardly, and extended in the width direction thereof, spaced in the longitudinal direction thereof to be formed in plural.

As described above, the housing is composed of a lower housing having a recess shape opened upwardly and an upper housing having a recess shape opened downwardly and coupled to face the lower housing on the upper portion of the lower housing to form the housing hollow part therein, and the through-hole is formed in the lower housing; a housing coupling part is formed on the lower end portion of the upper housing along the circumference thereof, and the housing coupling part is composed of a first bent portion bent outwardly, an upper housing extension portion extended downwardly from the first bent portion, and a second bent portion having the end portion of the upper housing extension portion formed to be bent inwardly; a lower housing bent portion curved and bent inwardly is formed on the upper end of the lower housing, and a part of the upper end portion of the lower housing is inserted into the housing coupling part; a coupling member is provided between the housing coupling part and the lower housing; the coupling member has a coupling member seating portion curved to contact the lower housing bent portion formed on the inside of the upper portion thereof and thereby has the inside contact with the outer surface of the lower housing and the outer surface of the lower housing bent portion, and has the outside contact with the inner surfaces of the first bent portion, the upper housing extension portion, and the second bent portion; and the end portion of the second bent portion of the upper housing is spaced apart from the outer surface of the lower housing.

As described above, the bottom portion of the housing is formed with a plurality of support member installation holes penetrated vertically and spaced apart from each other, and each of the support member installation holes is coupled to a support member; the support member has a support member through-hole penetrated and formed vertically, and is composed of a support member insertion portion, a support member holding portion, and a support member exposure portion; and the support member insertion portion has the outer surface formed to be inclined to reduce the cross-sectional area toward the upper portion thereof, the support member exposure portion is spaced downwardly from the support member insertion portion, and the support member holding portion is provided between the support member insertion portion and the support member exposure portion and is formed to have a cross-sectional area smaller than those of the support member insertion portion and the support member exposure portion so that step surfaces contacting the inner surface and the outer surface of the bottom surface of the housing are formed on the upper portion thereof and the lower portion thereof, respectively.

### [Advantageous Effects]

According to the juicer that is easy to manufacture and improves performance, it is possible to manufacture simple and easily, less likely to cause defects in the manufacturing process, and to prevent from being overheated by exhaust during use.

### [Description of Drawings]

FIG. 1 is a perspective diagram illustrating a juicer according to the related art.
FIG. 2 is a cross-sectional diagram illustrating the juicer according to the related art.
FIG. 3 is an enlarged diagram of the portion "B" of FIG. 2.
FIG. 4 is a cross-sectional diagram illustrating a motor housing provided in the juicer of the related art.
FIG. 5 is a diagram illustrating the planar cross section of the motor housing and a cooling fan provided in the juicer of the related art.
FIG. 6 is a partial cross-sectional diagram, as the partial enlarged diagram of a part of a juicer according to the present disclosure, corresponding to the portion "A" of FIG. 2 illustrating for explaining the coupling between an upper housing and a lower housing.
FIG. 7 is a partial cross-sectional diagram corresponding to the portion of FIG. 3 as the partial cross-sectional diagram of a part of the juicer according to the present disclosure.
FIG. 8 is a perspective diagram illustrating a lower motor housing constituting the motor housing provided in the juicer according to the present disclosure.
FIG. 9 is a perspective diagram illustrating an upper motor housing constituting the motor housing provided in the juicer according to the present disclosure.
FIG. 10 is a partial cross-sectional diagram illustrating for explaining an operation of the juicer of the present disclosure.

### [Best Mode]

Hereinafter, a juicer according to the present disclosure, which is easy to manufacture and improves performance, will be described in detail with reference to the drawings. In the description, a detailed description of the configurations overlapping with the related art will be omitted. Then, in the following description, it will be described by regarding the lateral direction of FIG. 2 as a longitudinal direction, and regarding the direction perpendicular to the paper surface of FIG. 2 as a width direction.

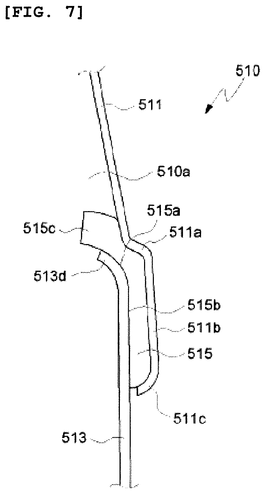

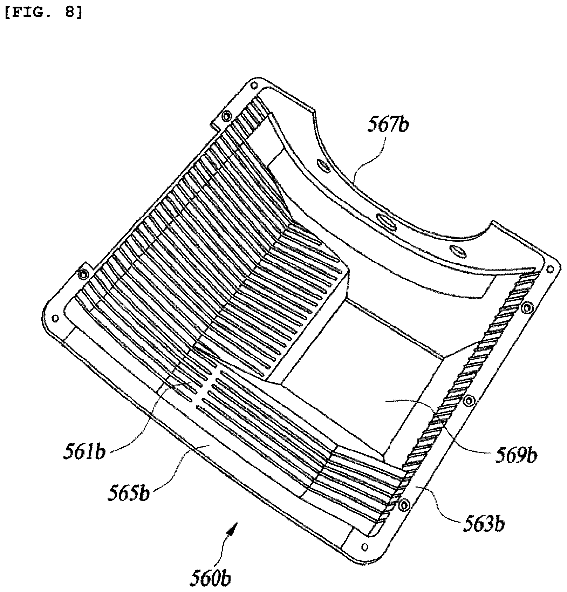

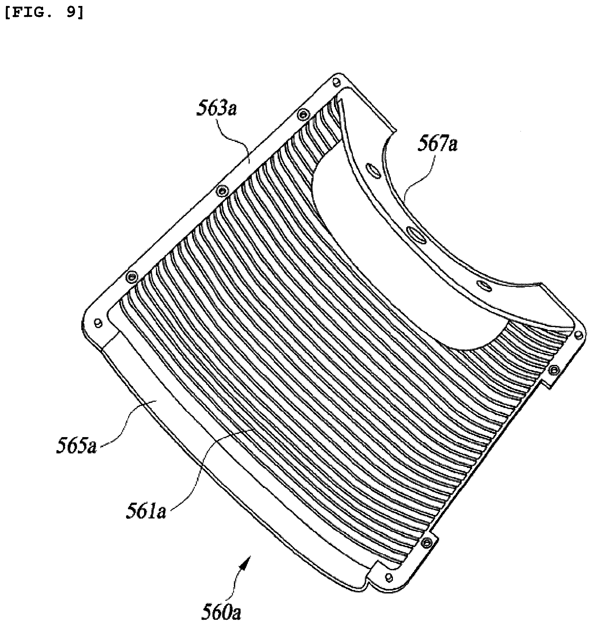

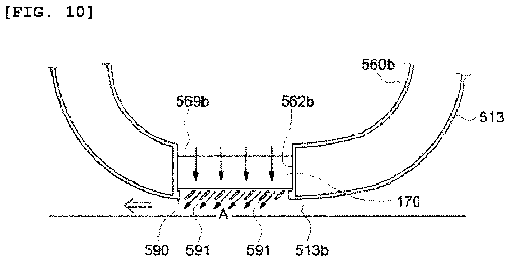

FIG. 6 is a partially enlarged diagram of a part of the juicer of the present disclosure, and is a partial cross-sectional diagram corresponding to a portion "A" of FIG. 2 for explaining the coupling between the upper housing and the lower housing, FIG. 7 is a partially enlarged diagram of a part of the juicer according to the present disclosure, and is a partial cross-sectional diagram corresponding to the portion of FIG. 3, FIG. 8 is a perspective diagram illustrating a lower motor housing constituting the motor housing provided in the juicer according to the present disclosure, FIG. 9 is a perspective diagram illustrating an upper motor housing constituting the motor housing provided in the juicer according to the present disclosure, and FIG. 10 is a partial cross-sectional diagram illustrating for explaining an operation of the juicer according to the present disclosure.

Referring to FIG. 1, a juicer that is easy to manufacture and improves performance according to the present disclosure is composed of a driving part for driving a juice part, a juice part for squeezing the juice, and a fastening part for detachably connecting the juice part to the driving part as in the related art.

In the following description, a description overlapping with the related art will be omitted, and only specific configurations of the present disclosure will be described.

The driving part is composed of a hollow housing 510 having a housing hollow part 510a formed therein, and a motor inserted into the motor housing and provided in the housing hollow part 510a. The juice part is connected to and driven by the rotation shaft of the motor to squeeze the juice. Since a configuration for the juice part is a known technology in the prior art, a detailed description thereof will be omitted. Since explanation of the fastening part for detachably connecting the juice part to the driving part has been described in detail in the related art, a description thereof will be omitted.

The housing 510 will be described.

The housing 510 may be made of a metal such as stainless steel.

The housing 510 is composed of a lower housing 513 that has a plate shape and has a concave shape opened upwardly and an upper housing 511 in a plate shape that has a concave shape opened downwardly and is coupled to the upper portion of the lower housing 513 to face the lower housing 513 to form the housing hollow part 510a therein.

A housing coupling part is formed on the lower end portion of the upper housing 511 along the circumference thereof. The housing coupling part is composed of a first bent portion 511a bent outwardly, an upper housing extension portion 511b extended downwardly from the first bent portion 511a, and a second bent portion 511c having the end portion of the upper housing extension portion 511b bent inwardly and formed. The first bent portion 511a and the second bent portion 511c are formed to be protruded and curved outwardly.

A lower housing bent portion 513d curved and bent inwardly is formed on the upper end of the lower housing 513. A part of the upper end portion of the lower housing 513 is inserted into the housing coupling part, and one or more portions thereof penetrate the upper housing extension portion 511b and the lower housing 513 sequentially along the circumference thereof to be fastened by the screw.

A coupling member 515 is provided between the housing coupling part and the lower housing 513. The coupling member 515 is extended along the circumference thereof between the housing coupling part and the lower housing 513. The coupling member 515 is made of an elastic material such as rubber.

The coupling member 515 has a coupling member seating portion 515a curved to contact the lower housing bent portion 513d at the inside of the upper portion thereof, has the inside contact with the outer surface of the lower housing 513 and the outer surface of the lower housing bent portion 513d, and has the outside contact with the inner surfaces of the first bent portion 511a, the upper housing extension potion 511b, and the second bent portion 511c. The end portion of the second bent portion 511c of the upper housing 511 is spaced apart from the outer surface of the lower housing 513, and the coupling member 515 is exposed to the bottom thereof between the upper housing 511 and the lower housing 513.

The coupling member 515 has the coupling member seating portion 515a contacting the outer surface of the lower housing bent portion 513d, and is provided in contact with the first bent portion 511a and the second bent portion 511c, such that the upper housing 511 is prevented from falling down excessively when the upper housing 511 is coupled to the upper portion of the lower housing 513, and the outer surface of the lower housing 513 is prevented from being damaged by the end portion of the second bent portion 511c.

The outer surface of the coupling member 515 is adhered to the inner surface of the housing coupling part of the upper housing 511 and the inner surface of the upper housing 511 disposed on the upper portion of the housing coupling part, and has a coupling member protrusion portion 515c, which is protruded to be inclined upwardly and inwardly, provided on the upper portion thereof. The coupling member protrusion portion 515c is provided in a shape extended to be inclined upwardly and inwardly so as to has the outer surface not contact the upper housing 511 and has the inner surface further protruded than the upper end of the lower housing 513. The coupling member protrusion portion 515c is provided to reliably prevent the upper housing 511 from falling down excessively when the upper housing 511 is coupled to the lower housing 513.

A circular through-hole 513b is formed in the bottom portion of the lower housing 513 so as to discharge inner air at a position eccentric to one side in the width direction from a central portion thereof, and a plurality of support member installation holes 513a for allowing a support member 581 to be installed are penetrated and formed vertically.

The motor housing 560 will be described. The motor housing 560 may be made of synthetic resin such as polyvinyl chloride (PVC).

As illustrated in FIGS. 8 and 9, the motor housing 560 is composed of an upper motor housing 560a and a lower motor housing 560b that are coupled to face each other.

The lower motor housing 560b has an upwardly opened shape and is coupled to face the upper motor housing 560a, and has a motor housing opening portion 569b, which is downwardly opened at a position eccentric to one side in the width direction from the central portion thereof, on the lower portion thereof. The lower motor housing 560b is composed of a lower motor housing body having a substantially semicircular arc-shaped cross section and formed in a shape extended in the longitudinal direction thereof, and a lower motor housing wall provided at both ends of the lower motor housing body in the longitudinal direction. The lower motor housing wall is formed with a lower motor housing first recess 565b and a lower motor housing second recess 567b that are substantially coaxial with the lower motor housing body and are recess, respectively. The lower motor housing first recess 565b is formed on the rear in the longitudinal direction thereof, and the lower motor housing second recess 567b is formed on the front in the longitudinal direction thereof. The motor housing opening portion 569b is formed in the lower motor housing body. A lower motor housing flange 563b, which is extended along the longitudinal direction thereof and is protruded outwardly in the width direction thereof, is provided on both end portions of the lower motor housing body. The lower motor housing flange 563b is formed with a plurality of through-holes formed to be spaced along the longitudinal direction thereof.

The upper motor housing 560a is coupled to face the upper motor housing 560a as a downwardly opened shape. The upper motor housing 560b is composed of an upper motor housing body having a substantially semicircular arc-shaped cross section and formed in a shape extended in the longitudinal direction thereof, and an upper motor housing wall provided at both ends of the upper motor housing body in the longitudinal direction thereof. The upper motor housing wall is formed with an upper motor housing first recess 565a and an upper motor housing second recess 567a that are substantially coaxial with the upper motor housing body and are recess, respectively. The upper motor housing first recess 565a is formed on the rear in the longitudinal direction thereof, and the upper motor housing second recess 567a is formed on the front in the longitudinal direction thereof. An upper motor housing flange 563a, which is extended along the longitudinal direction thereof and is protruded outwardly in the width direction thereof, is provided on both end portions of the upper motor housing body. The upper motor housing flange 563a is formed with a plurality of through-holes formed to be spaced along the longitudinal direction thereof.

The lower motor housing flange 563b and the upper motor housing flange 563a are provided in contact with each other when the lower motor housing 560b and the upper motor housing 560a face each other vertically, and a screw is inserted into the through-hole and a nut is fastened to be coupled with each other.

The upper motor housing first recess 565a and the lower motor housing first recess 565b face each other to form an opening on the rear in the longitudinal direction thereof, and the upper motor housing second recess 567a and the lower motor housing second recess 567b face each other to form an opening on the front in the longitudinal direction thereof.

Guide protrusions 561a, 561b, which has a shape parallel with each other, protruded inwardly, and extended in the width direction thereof, are formed on the inner surfaces of the lower motor housing 560b and the upper motor housing 560a constituting the motor housing to be spaced apart from each other in the longitudinal direction and be formed in plural. It is possible to provide the guide protrusions 561a, 561b, thus increasing the stiffness of the motor housing, and meanwhile, it is possible to guide the air flowing inside to flow in the width direction thereof, thus facilitating the discharge and increasing the cooling effect.

The lower motor housing 560b has the hollow lower motor housing extension portion 562b, which is extended downwardly at a position eccentric to one side in the width direction from the central portion thereof, provided on the lower portion thereof. The motor housing opening portion 569b is formed by opening the end portion of the lower motor housing extension portion 562b. The lower motor housing extension portion 562b is disposed on the upper portion of the through-hole 513b of the lower housing 513.

The cooling fan 170 is provided in the lower motor housing extension portion 562b. The cooling fan 170 is coupled to the lower housing 513 so as to be disposed on the upper portion of the through-hole 513b of the lower housing 513.

A flow guide member 590 is provided on the lower portion of the cooling fan 170. The flow guide member 590 may also be inserted into the through-hole 513b, and may also be provided between the cooling fan 170 and the lower housing 513 so as to be disposed on the upper portion of the through-hole 513b. The lower end of the lower motor housing extension portion 562b is provided in contact with the inner surface of the lower housing 513. The flow guide member 590 is provided with a plurality of guide members 591 that are spaced apart from each other in the width direction thereof and have the lower ends inclined so that the lower motor housing extension portion 562b is oriented in the eccentric direction, and thereby, the air that has been downwardly flowed by the cooling fan 170 is diverted in an eccentric direction while passing through the flow guide member 590 and is discharged. The discharged air flows in an inclined direction in the eccentric direction, thus reducing the influence on the housing 510 even when it is reflected to the floor where the juicer is placed.

The support member 581 will be described.

The support member 581 is made of synthetic resin such as urethane rubber having elasticity.

The support member 581 is inserted and coupled to the support member installation hole 513a. The support member 581 is formed with a support member through-hole 581b vertically, and is composed of a support member insertion portion 581-1, a support member holding portion 581-3, and a support member exposure portion 581-2 from the upper portion thereof. The support member insertion portion 581-1 is formed in a circular cross section and has the outer surface formed to be inclined so that the cross-sectional area reduces toward the upper portion thereof. The support member exposure portion 581-2 has a circular cross section and is downwardly spaced apart from the support member insertion portion 581-1. The support member holding portion 581-3 is provided between the support member insertion portion 581-1 and the support member exposure portion 581-2 and is formed to have a cross-sectional area smaller than those of the support member insertion portion 581-1 and the support member exposure portion 581-2 so that step surfaces contacting the inner surface and the outer surface of the bottom portion of the lower housing 513 are formed on the upper portion thereof and the lower portion thereof, respectively. The cross section of the support member installation hole 513a is formed in a circular shape, and the cross section of the support member holding portion 581-3 is also formed in a circular shape.

The lower end of the support member exposure portion 581-2 is protruded downwardly from the lowest outer surface of the bottom portion of the lower housing 513.

### [Industrial Applicability]

According to the juicer that is easy to manufacture and improves performance, it is easy to manufacture, has a low possibility of occurrence of defects in the manufacturing process, and is prevented from being overheated by exhaust during use, and accordingly, it may be used in the industrial field where such demand is present.

## Claims

1. A juicer that is easy to manufacture and improves performance, comprising:
a driving part composed of a housing having a housing hollow part formed therein and a motor provided the housing hollow part by being surrounded by a motor housing, a juice part connected to the driving part to be driven by the driving part to squeeze the juice, and a fastening part for detachably coupling the juice part to the driving part; the motor housing is composed of an upper motor housing having a shape opened downwardly and a lower motor housing having a shape opened upwardly and coupled to face the upper motor housing to be formed in a shape opened forwardly and backwardly, and is formed with a motor housing opening portion eccentric to one side in the width direction from the central portion thereof to be opened downwardly; a cooling fan for causing downward flow of air by operation is provided in the motor housing opening portion, and the housing is formed with a through-hole that is penetrated vertically so as to be eccentric to one side in the width direction from the central portion thereof to dispose on the lower portion of the cooling fan; and the inner air is discharged by the operation of the cooling fan through the through-hole formed at the position eccentric to one side from the central portion in the width direction thereof.

2. The juicer that is easy to manufacture and improves performance of claim 1, wherein the lower motor housing has a hollow lower motor housing extension portion, which is extended downwardly at the position eccentric to one side in the width direction from the central portion thereof, provided on the lower portion thereof, and the motor housing opening portion is formed to have the end portion of the lower motor housing extension portion opened; the cooling fan is provided in the lower motor housing extension portion; and a flow guide member penetrated vertically is formed on the lower portion of the cooling fan, and the flow guide member is spaced apart from each other and has a guide member inclined in the direction in which the lower motor housing extension portion has been eccentric, and thereby, the air flowed downwardly by the cooling fan is discharged by diverting to the eccentric direction while passing through the flow guide member.

3. The juicer that is easy to manufacture and improves performance of claim 2,
wherein the motor housing has a guide protrusion, which has a shape parallel with each other, protruded inwardly, and extended in the width direction thereof, spaced in the longitudinal direction thereof to be formed in plural.

4. The juicer that is easy to manufacture and improves performance of claim 2 or claim 3,
wherein the housing is composed of a lower housing having a recess shape opened upwardly and an upper housing having a recess shape opened downwardly and coupled to face the lower housing on the upper portion of the lower housing to form the housing hollow part therein, and the through-hole is formed in the lower housing; a housing coupling part is formed on the lower end portion of the upper housing along the circumference thereof, and the housing coupling part is composed of a first bent portion bent outwardly, an upper housing extension portion extended downwardly from the first bent portion, and a second bent portion having the end portion of the upper housing extension portion formed to be bent inwardly; a lower housing bent portion curved and bent inwardly is formed on the upper end of the lower housing, and a part of the upper end portion of the lower housing is inserted into the housing coupling part; a coupling member is provided between the housing coupling part and the lower housing; the coupling member has a coupling member seating portion curved to contact the lower housing bent portion formed on the inside of the upper portion thereof and thereby has the inside contact with the outer surface of the lower housing and the outer surface of the lower housing bent portion, and has the outside contact with the inner surfaces of the first bent portion, the upper housing extension portion, and the second bent portion; and the end portion of the second bent portion of the upper housing is spaced apart from the outer surface of the lower housing.

5. The juicer that is easy to manufacture and improves performance of claim 2 or claim 3,
wherein the bottom portion of the housing is formed with a plurality of support member installation holes penetrated vertically and spaced apart from each other, and each of the support member installation holes is coupled to a support member;
the support member has a support member through-hole penetrated and formed vertically, and is composed of a support member insertion portion, a support member holding portion, and a support member exposure portion; and the support member insertion portion has the outer surface formed to be inclined to reduce the cross-sectional area toward the upper portion thereof, the support member exposure portion is spaced downwardly from the support member insertion portion, and the support member holding portion is provided between the support member insertion portion and the support member exposure portion and is formed to have a cross-sectional area smaller than those of the support member insertion portion and the support member exposure portion so that step surfaces contacting the inner surface and the outer surface of the bottom surface of the housing are formed on the upper portion thereof and the lower portion thereof, respectively.
